# EUROPÄISCHE PATENTSCHRIFT

(11) **EP 3 924 699 B1**
(45) Veröffentlichungstag und Bekanntmachung des Hinweises auf die Patenterteilung: **29.03.2023**
(21) Anmeldenummer: 20706085.6
(22) Anmeldetag: 06.02.2020
(51) Int. Cl.: G01F 11/08, B65D 47/20

(54) **DOSIEREINHEIT FÜR FLIESSFÄHIGE FESTSTOFFE**
METERING UNIT FOR FREE-FLOWING SOLIDS
UNITÉ DE DOSAGE POUR DES SOLIDES COULANTS

(30) Priorität: 15.02.2019 DE 102019103900
(43) Veröffentlichungstag der Anmeldung: 22.12.2021
(73) Patentinhaber: AZO Holding GmbH, 74706 Osterburken (DE)
(72) Erfinder: PAHL, Frank, 74746 Höpfingen (DE); BÖHRER, Jürgen, 74078 Heilbronn (DE); SCHMITT, Tobias, 74706 Osterburken (DE)
(74) Vertreter: Lichti - Patentanwälte Partnerschaft mbB
(86) Internationale Anmeldenummer: PCT/EP2020/000034
(87) Internationale Veröffentlichungsnummer: WO 2020/164791

(56) Entgegenhaltungen:
- WO-A2-2008/017173
- DE-A1- 1 511 979
- DE-U1-202007 003 535
- GB-A- 1 300 063
- US-A- 3 002 660
- US-A- 3 773 233
- US-A- 4 564 127

## Beschreibung

Die Erfindung betrifft eine Dosiereinheit für fließfähige Feststoffe, mit einem aus einem ersten nachgiebig elastischen Material geformten Auslassstutzen, welcher an seinem einen Ende eine zum Festlegen am Auslass eines Vorratsbehälters ausgebildete Einlassöffnung und an seinem anderen Ende eine zwischen zwei entgegengesetzten Dichtlippen des Auslassstutzens gebildete, im Wesentlichen schlitzförmige Auslassöffnung aufweist, welche in Richtung ihrer Schließstellung elastisch vorbelastet ist und infolge etwa in ihrer Erstreckungsrichtung einwirkender Druckkräfte entgegen ihrer elastischen Vorbelastung in eine Öffnungsstellung überführbar ist.

Derartige Dosiereinheiten für pulver- und/oder partikelförmige, fließfähige Feststoffe sind bekannt und dienen insbesondere zur Dosierung und gegebenenfalls Mischung einzelner Schüttgutkomponenten gemäß einer vorgegebenen Rezeptur, wobei es sich bei den Schüttgutkomponenten beispielsweise um beliebige Chemikalien einschließlich Bestandteilen von Farben, wie Farbstoffe, Pigmente etc., Kunststoffgranulate, Lebensmittel, pharmazeutische Wirkstoffen, Baustoffe und dergleichen handeln kann. Der aus einem nachgiebig elastisch verformbaren Material gefertigte Auslassstutzen der Dosiereinheit kann zu diesem Zweck - sei es lösbar oder sei es stationär - mit seiner Einlassöffnung am auslassseitigen Ende eines den jeweiligen fließfähigen Feststoff aufnehmenden Vorratsbehälters festgelegt sein, wobei die am entgegengesetzten Ende des Auslassstutzens angeordnete, im Wesentlichen schlitzförmige Auslassöffnung aufgrund ihrer elastischen Vorbelastung in ihre Schließstellung, in welcher die die Auslassöffnung zwischen sich begrenzenden Dichtlippen einander anliegen, den Auslassstutzen verschließt. Um dem mit dem Auslassstutzen der Dosiereinheit versehenen Vorratsbehälter nun eine gewünschte Menge der hierin bevorrateten, fließfähigen Feststoffe entnehmen zu können, kann die im Wesentlichen schlitzförmige Auslassöffnung des Auslassstutzens entgegen ihrer elastischen Vorbelastung in eine Öffnungsstellung überführt werden, indem auf die im Wesentlichen schlitzförmige Auslassöffnung Druckkräfte ausgeübt werden, welche die schlitzförmige Auslassöffnung etwa in Erstreckungsrichtung derselben komprimieren, so dass die die schlitzförmige Auslassöffnung zwischen sich begrenzenden Dichtlippen elastisch voneinander fort bewegt werden und die Auslassöffnung somit geöffnet wird. Ist die gewünschte Menge des jeweiligen fließfähigen Feststoffes dosiert worden, so kann die im Wesentlichen schlitzförmige Auslassöffnung des Auslassstutzens wieder druckentlastet werden, woraufhin sie infolge ihrer elastischen Vorbelastung in die Schließstellung wieder verschlossen wird und die Dichtlippen aneinander zur Anlage kommen.

Die aus nachgiebig elastischen Materialien, wie Silikon, Gummi oder anderen elastomeren Kunststoffmaterialien, z.B. Polyurethanen und dergleichen, geformten Auslassstutzen gattungsgemäßer Dosiereinheiten besitzen jedoch den Nachteil, dass der material- und geometriebedingt durch das elastische Rückverformungsvermögen des Auslassstutzens einstellbaren elastischen Vorbelastung der im Wesentlichen schlitzförmigen Auslassöffnung in die Schließstellung Grenzen gesetzt sind, wobei mit zunehmender Größe des Auslassstutzens bzw. bei zunehmender Länge der schlitzförmigen Auslassöffnung ein dichtes Verschließen derselben allein aufgrund der elastisch vorbelasteten Anlage der Dichtlippen aneinander nicht mehr möglich ist. Entsprechendes gilt bei zunehmender Standzeit und hiermit einhergehender Materialermüdung nach häufigem Öffnen und Schließen der im Wesentlichen schlitzförmigen Auslassöffnung des Auslassstutzens.

Die WO 2008/017173 A2 beschreibt eine gattungsgemäße Dosiereinheit mit einem aus einem nachgiebig elastisch verformbaren Material gefertigten Auslassstutzen mit einer schlitzförmigen Auslassöffnung. Um die elastische Rückverformung der schlitzförmigen Auslassöffnung des Auslassstutzens von ihrer Öffnungsstellung infolge Einwirkung von Druckkräften in ihre Schließstellung zu unterstützen, kann eine Rückstelleinrichtung vorgesehen sein, welche federunterstützt in den Auslassstutzen der Dosiereinheit hineinragt oder in diesen integriert ist, wobei insbesondere Spiralfedern oder auf bzw. in das Kunststoffmaterial des Auslassstutzens ein- oder aufvulkanisierte Streifen aus Formgedächtnislegierungen vorgesehen sein können. Indes erweist sich auch dies nicht nur als in konstruktiver Hinsicht aufwändig, sondern müssen insbesondere fließfähige Feststoffe, welche hohen Anforderungen an die Hygiene genügen müssen, vor einem Kontakt mit in die Feststoffschüttung eingreifenden Federn oder anderen Metallteilen bewahrt werden, um keine Verunreinigungen einzutragen. Darüber hinaus besteht insbesondere im Falle von relativ feinpartikulären Feststoffen die Gefahr einer elektrostatischen Aufladung von nicht geerdeten Metallteilen, was zu Funkenentladungen bis hin zu Staubexplosionen führen kann, weshalb von einem Einsatz derartiger Metallteile, wie Federn oder Formgedächtnisstreifen, in vielen Anwendungsfällen abgesehen werden sollte. Eine ähnliche Dosiereinheit, deren nachgiebig elastisch verformbarer Auslassstutzen zwecks Vermeidung einer Kontamination der Umgebung mit einem Folienschlauch ausgekleidet ist, welcher mittels einer Streckeinrichtung gestreckt werden kann, um den Querschnitt des Folienschlauches zu vermindern oder diesen mittels einer Schweißeinrichtung zu verschließen, ist aus der EP 2 199 208 A2 bekannt.

Darüber hinaus sind aus der DE 1 511 979 A1 der gattungsgemäßen Dosiereinheit ähnliche Ausgabe- und Verschlusseinrichtungen für Kleinbehälter, wie Taschenaschenbecher oder Tablettenspender, bekannt, welche einen Ausgabe- und Verschlussstutzen aus einem nachgiebig elastisch verformbaren Material aufweisen, welcher an einem Öffnungsquerschnitt des Kleinbehälters befestigt ist. Eine schlitzförmige Auslassöffnung des Ausgabe- und Verschlussstutzens ist elastisch in ihre Schließstellung vorbelastet und kann mittels parallel hierzu auf diese einwirkender, manueller Druckkräfte bedarfsweise geöffnet werden.

Der Erfindung liegt die Aufgabe zugrunde, eine Dosiereinheit für fließfähige Feststoffe der eingangs genannten Art unter zumindest weitestgehender Vermeidung der vorgenannten Nachteile auf einfache und kostengünstige Weise dahingehend weiterzubilden, dass die im Wesentlichen schlitzförmige Auslassöffnung des nachgiebig elastisch verformbaren Auslassstutzens stets sicher und zuverlässig in ihrer Schließstellung gehalten werden kann, aber gleichwohl ein einfaches Öffnen der schlitzförmigen Auslassöffnung infolge Einwirkung von Druckkräften gewährleistet ist.

Erfindungsgemäß wird dieser Aufgabe bei einer Dosiereinheit der eingangs genannten Art dadurch gelöst, dass die im Wesentlichen schlitzförmige Auslassöffnung des Auslassstutzens mittels einer separaten, lösbar am Außenumfang der die Auslassöffnung begrenzenden Dichtlippen aufbringbaren Klammer aus einem zweiten nachgiebig elastischen Material elastisch in ihre Schließstellung vorbelastet ist, wobei die im montierten Zustand außenseitig den Dichtlippen anliegenden Schenkel der Klammer in Richtung ihrer aneinander angenäherten Stellung elastisch vorbelastet und infolge der etwa in ihrer Erstreckungsrichtung einwirkenden Druckkräfte elastisch voneinander fort bewegbar sind.

Die erfindungsgemäße Ausgestaltung stellt eine dauerhafte und zuverlässige elastische Vorbelastung der Auslassöffnung des Auslassstutzens in die Schließstellung sicher, wobei die lösbar am Außenumfang der die Auslassöffnung begrenzenden Dichtlippen aufgebrachte Klammer stets für eine zuverlässige elastische Vorbelastung der die Auslassöffnung zwischen sich begrenzenden Dichtlippen des Auslassstutzens aufeinander zu in die Schließstellung sorgt. Die mit der erfindungsgemäßen Klammer versehene Auslassöffnung des nachgiebig elastisch verformbaren Auslassstutzens lässt sich dabei in einfacher Weise öffnen, indem die außenseitig seiner Dichtlippen anliegenden Schenkel der Klammer, welche in Richtung ihrer aneinander angenäherten Stellung elastisch vorbelastet sind, mit etwa parallel zu ihrer Erstreckungsrichtung einwirkenden Druckkräften beaufschlagt werden, um sie elastisch voneinander fort zu bewegen und die Auslassöffnung dabei freizugeben bzw. in eine Öffnungsstellung mit auseinandergespreizten Dichtlippen zu überführen. Da die Kraftrichtung zum Auseinanderspreizen der Schenkel der Klammer dieselbe ist wie zum Auseinanderspreizen der die Auslassöffnung zwischen sich begrenzenden Dichtlippen des Auslassstutzens, werden dabei zugleich die Dichtlippen voneinander beabstandet und wird die im Wesentlichen schlitzförmige Auslassöffnung des Auslassstutzens geöffnet. Sobald die Auslassöffnung des Auslassstutzens nach Dosierung der gewünschten Menge eines jeweiligen fließfähigen Feststoffes wieder geschlossen werden soll, ist lediglich eine Druckentlastung der Klammer und der die Auslassöffnung zwischen sich begrenzenden Dichtlippen erforderlich, woraufhin letztere aufgrund der elastischen Vorbelastung der Klammer sowie gegebenenfalls zusätzlich aufgrund einer eigenen elastischen Vorbelastung in die Schließstellung überführt werden. Es sei an dieser Stelle darauf hingewiesen, dass sich die im Wesentlichen schlitzförmige Auslassöffnung nicht notwendigerweise exakt linear erstrecken muss, sondern beispielsweise auch einen etwa sinus-, zickzack- oder andersartigen Verlauf besitzen kann.

Ein weiterer Vorteil der erfindungsgemäßen Ausgestaltung besteht neben der sehr einfachen konstruktiven Ausgestaltung der Klammer als separates, auf den Außenumfang der die Auslassöffnung des Auslassstutzens zwischen sich begrenzenden Dichtlippen aufbringbares und folglich bedarfsweise auch leicht austauschbares Bauteil insbesondere darin, dass sich die Klammer ausschließlich außenseitig des Auslassstutzens befindet und keine zusätzlichen Teile im Innern desselben erforderlich sind, um hierdurch bedingte Kontaminationen der zu dosierenden Schüttgüter zu vermeiden. Darüber hinaus benötigt die erfindungsgemäße Ausgestaltung keinerlei Energie und erfüllt ihre ihr zugedachte Funktion allein aufgrund der hierdurch bewirkten elastischen - mechanischen - Vorbelastung der Auslassöffnung in die Schließstellung. Wie weiter unten noch näher erläutert, kann die Klammer sowie auch der Auslassstutzen selbst insbesondere aus metallfreien Werkstoffen, z.B. aus elastomeren Kunststoffmaterialien, gebildet sein, so dass sich das oben geschilderte Problem einer elektrostatischen Aufladung von Metallteilen bei der Pulverdosierung nicht stellt.

Die zwischen den Dichtlippen gebildete, im Wesentlichen schlitzförmige Auslassöffnung des aus dem ersten nachgiebig elastisch verformbaren Material geformten Auslassstutzens muss nicht notwendigerweise gleichfalls in Richtung ihrer Schließstellung elastisch vorbelastet sein, wie es bei dem eingangs beschriebenen Stand der Technik zwingend der Fall ist, doch kann dies vorzugsweise auch zusätzlich vorgesehen sein, um beispielsweise im Falle eines Versagens oder eines Austauschs der Klammer gleichwohl für eine einwandfreie Dichtigkeit der Auslassöffnung allein aufgrund ihrer elastischen Vorbelastung in die Schließstellung zu sorgen. Demgemäß kann die zwischen den Dichtlippen gebildete, im Wesentlichen schlitzförmige Auslassöffnung vorteilhafterweise allein aufgrund des elastischen Rückverformungsverhaltens des ersten elastisch nachgiebigen Materials des Auslassstutzens in Richtung ihrer Schließstellung elastisch vorbelastet sein.

Um auf einfache Weise mehr oder minder allein aufgrund der Formgebung der mit den die Auslassöffnung des Auslassstutzens zwischen sich begrenzenden Dichtlippen zusammenwirkenden Klammer zu sorgen, kann in vorteilhafter Ausgestaltung vorgesehen sein, dass die die Auslassöffnung des Auslassstutzens zwischen sich bildenden Dichtlippen einen zumindest abschnittsweise oder insbesondere auch im Wesentlichen gänzlich konvex gekrümmten Außenumfang besitzen, während die Schenkel der Klammer in deren demontiertem Zustand einen demgegenüber geringer konvex gekrümmten, im Wesentlichen geradlinigen oder insbesondere auch konkav gekrümmten Innenumfang besitzen. Folglich ergibt sich die elastische Vorbelastung der Dichtlippen aufeinander zu, um die Auslassöffnung zu verschließen, vornehmlich aufgrund der elastischen Verformung der Schenkel der Klammer, wenn diese auf den konvex gekrümmten Außenumfang der Dichtlippen aufgebracht wird, wobei die - im unbelasteten, nicht montierten Zustand ihrerseits geringfügiger konvex gekrümmten, im Wesentlichen geradlinigen oder insbesondere auch konkav gekrümmten bzw. taillierten - Schenkel der Klammer entlang den konvex gekrümmten Dichtlippen nach außen gebogen werden und aufgrund ihres elastischen Rückstellvermögens für die erforderliche elastische Vorbelastung der Auslassöffnung in deren Schließstellung sorgen. Darüber hinaus ergibt sich auf diese Weise auch eine einfache Überführung der Auslassöffnung in eine Öffnungsstellung, indem - wie oben erwähnt - die im montierten Zustand außenseitig den Dichtlippen anliegenden Schenkel der Klammer infolge etwa in ihrer Erstreckungsrichtung einwirkender Druckkräfte elastisch gemeinsam mit den Dichtlippen voneinander fort bewegt bzw. auseinander gespreizt werden.

Die Klammer kann zweckmäßigerweise im Wesentlichen ringförmig ausgestaltet sein und im montierten Zustand die die Auslassöffnung des Auslassstutzens zwischen sich bildenden Dichtlippen vollumfänglich umgreifen, um für eine große elastische Rückstellkraft bei einer hohen Dauerhaftigkeit zu sorgen.

Die lösbar am Außenumfang der die Auslassöffnung zwischen sich bildenden Dichtlippen des Auslassstutzens aufbringbare Klammer kann grundsätzlich mehr oder minder rein kraftschlüssig am Außenumfang der die Auslassöffnung des Auslassstutzens begrenzenden Dichtlippen aufbringbar sein. Im Hinblick auf eine dauerhafte Befestigung der Klammer, ohne dass die Gefahr eines unbeabsichtigten Verrutschens derselben auch während längeren Betriebszeiten besteht, kann es jedoch von Vorteil sein, wenn die Klammer ferner formschlüssig am Außenumfang der die Auslassöffnung des Auslassstutzens begrenzenden Dichtlippen aufbringbar ist, wobei die Klammer insbesondere mit inneren Eingriffsstrukturen ausgestattet sein kann, welche zu äußeren Eingriffsstrukturen der Dichtlippen komplementär sind, um für ein formschlüssiges und axialfestes, lösbares Anbringen der Klammer am Außenumfang der Dichtlippen des Auslassstutzens nach Art einer Rastverbindung zu sorgen, bei welcher sich die inneren Eingriffsstrukturen der Klammer im Eingriff mit den hierzu komplementären äußeren Eingriffsstrukturen der Dichtlippen befinden. Die Eingriffsstrukturen können z.B. zueinander komplementäre Umfangsausnehmungen bzw. Umfangsvorsprünge umfassen, welche einerseits am Außenumfang der Dichtlippen, andererseits am Innenumfang der Klammer vorgesehen sein können. Alternativ oder zusätzlich sind beispielsweise zwei äußere Umfangsvorsprünge der Dichtlippen denkbar, zwischen welche die Klammer aufbringbar sein kann, um letztere gleichfalls formschlüssig, axialfest zu halten. Indes sind zur Gewährleistung eines sicheren Sitzes der Klammer am Außenumfang der Dichtlippen des Auslassstutzens selbstverständlich auch beliebige andere, zueinander komplementäre Eingriffsstrukturen denkbar.

Der Auslassstutzen kann sich beispielsweise von seiner Einlassöffnung in Richtung seiner im Wesentlichen schlitzförmigen Auslassöffnung etwa trichterförmig verjüngen. Die Einlassöffnung kann hierbei z.B. etwa kreisrund sein oder eine beliebige andere, an den Auslass eines jeweiligen Vorratsbehälter, an welchem der Auslassstutzen angeordnet werden soll, angepasste Umfangsform besitzen.

Die Einlassöffnung des Auslassstutzens kann ferner vorzugsweise lösbar an dem Vorratsbehälter befestigbar sein, wobei die Einlassöffnung insbesondere an ihrem Außenumfang mit Befestigungsstrukturen versehen ist, welche zum kraft- und/oder formschlüssigen Anbringen einer Rohrschelle oder dergleichen dienen, welche zum lösbaren Verspannen des Auslassstutzens am Auslass des Vorratebehälters dient. Darüber hinaus sind selbstverständlich auch innenseitig der Einlassöffnung des Auslassstutzens beliebige Eingriffsstrukturen denkbar, welche zu außenseitig des Auslasses des Vorratsbehälters angeordneten Eingriffsstrukturen komplementär sind, wie z.B. zueinander komplementäre Umfangsausnehmungen bzw. Umfangsvorsprünge, um für eine sichere und dauerhafte, aber gleichwohl lösbare Verbindung zwischen dem Auslassstutzen und dem Auslass des Vorratsbehälters zu sorgen.

Wie bereits angedeutet, handelt es sich bei dem ersten nachgiebig elastischen Material des Auslassstutzen vorzugsweise um ein erstes elastomeres Kunststoffmaterial, z.B. Silikon, Gummi oder beliebige andere, vorzugsweise thermoplastische, Elastomere, wie beispielsweise Polyurethanelastomere oder dergleichen. Der Auslassstutzen kann hierbei insbesondere einstückig aus dem ersten elastomeren Kunststoffmaterial gebildet bzw. geformt sein, um erhöhten Anforderungen an die Hygiene zu genügen, wie sie z.B. bei der Handhabung von chemischen oder pharmazeutischen Feststoffen in der Regel zu beachten sind. Das nachgiebig elastisch verformbare Kunststoffmaterial des Auslassstutzens kann dabei selbstverständlich in als solcher bekannter Weise mit Additiven einschließlich Füll- und Verstärkungsstoffen bzw. -fasern versetzt sein. Gemäß einer in fertigungstechnischer Hinsicht einfachen und kostengünstigen Ausgestaltung kann der Auslassstutzen ferner z.B. als Spritzguss-Formteil oder Guss-Formteil aus dem ersten nachgiebig elastischen elastomeren Kunststoffmaterial geformt sein.

Wie ebenfalls bereits angedeutet, kann es sich bei dem zweiten nachgiebig elastischen Material der Klammer gleichfalls vorzugsweise um ein zweites elastomeres Kunststoffmaterial, z.B. ebenfalls Silikon, Gummi oder beliebige andere, vorzugsweise thermoplastische Elastomere, beispielsweise Polyurethanelastomere oder dergleichen, handeln, so dass der Einsatz von Metallwerkstoffen sowohl für die Klammer als auch für den Auslassstutzen der Dosiereinheit entbehrlich wird. Die Klammer kann hierbei vorteilhafterweise einstückig aus dem zweiten elastomeren Kunststoffmaterial und beispielsweise gleichfalls als Spitzguss- oder Guss-Formteil ausgebildet sein, um neben einer einfachen und kostengünstigen Herstellung einerseits für eine hohe Wartungsfreundlichkeit mit sehr geringem Montage- bzw. Demontageaufwand zu sorgen, andererseits hohen Hygieneanforderungen, wie z.B. im Falle eines Einsatzes in Reinräumen, genügen zu können, welche im Falle eines Aufbaus der Klammer mit einer Mehrzahl an aneinander festgelegten Einzelteilen oft nur schwer zu erfüllen wären. Ferner kann das zweite elastisch nachgiebige Material der Klammer insbesondere einen größeren Elastizitätsmodul (E-Modul) aufweisen als das erste elastisch nachgiebige Material des Auslassstutzens, d.h. das elastisch nachgiebige Material der Klammer erfordert zu seiner elastischen Verformung größere Verformungskräfte als jenes des Auslassstutzens, ist folglich etwas "starrer", um in dem an die Dichtlippen des Auslassstutzens montierten Zustand der Klammer eine hinreichend hohe elastische Vorbelastung der Auslassöffnung des Auslassstutzens in die Schließstellung sicherzustellen. Alternativ können grundsätzlich auch dieselben nachgiebig elastischen Materialien sowohl für den Auslassstutzen als auch für die Klammer verwendet werden.

Gemäß einer vorteilhaften Weitebildung der erfindungsgemäßen Dosiereinheit kann vorgesehen sein, dass sie ferner eine Betätigungseinrichtung umfasst, welche zum Aufbringen von Druckkräften auf die am Außenumfang der die Auslassöffnung des Auslassstutzens begrenzenden Dichtlippen aufgebrachte Klammer etwa in Erstreckungsrichtung deren außenseitig den Dichtlippen anliegenden Schenkeln ausgebildet ist, um anlässlich eines Dosiervorgangs die Schenkel der Klammer elastisch voneinander fort zu bewegen und dabei die im Wesentlichen schlitzförmige Auslassöffnung des Auslassstutzens von ihrer Schließstellung in eine Öffnungsstellung zu überführen.

Die Betätigungseinrichtung weist dabei insbesondere zwei aufeinander zu und voneinander fort bewegbare Betätigungsfinger auf, welche zum Aufbringen der Druckkräfte auf die am Außenumfang der die Auslassöffnung des Auslassstutzens begrenzenden Dichtlippen aufgebrachte Klammer dienen, und zwar - wie bereits erwähnt - in einer Richtung sowohl etwa in Erstreckungsrichtung der Schenkel der Klammer als auch der im Wesentlichen schlitzförmigen Auslassöffnung. Die Betätigungsfinger können dabei in beliebiger Weise aufeinander zu und voneinander fort bewegbar sein, wie beispielsweise translatorisch entlang von Führungen, rotatorisch durch Verschwenken um je eine Schwenkachse, etc.

Die Betätigungsfinger der Betätigungseinrichtung können darüber hinaus an ihren einander zugewandten Seiten mit je einem Eingriffsprofil versehen sein, welche insbesondere im Wesentlichen komplementär zur Außenkontur der einander entgegengesetzten Enden der Klammer ausgestaltet sind, um für eine sichere Abstützung der Klammer an den Betätigungsfingern zu sorgen, wenn letztere anlässlich eines Dosiervorgangs aufeinander zu bewegt werden, um die Schenkel der Klammer und zugleich die die Auslassöffnung zwischen sich bildenden Dichtlippen des Auslassstutzens elastisch voneinander fort nach außen zu verformen und dabei die Auslassöffnung in eine Öffnungsstellung zu versetzen.

Während die Betätigungsfinger der Betätigungseinrichtung grundsätzlich auch manuell aufeinander zu und voneinander fort bewegt werden können, erweist es sich im Hinblick auf eine automatisierte Dosiereinheit von Vorteil, wenn die Betätigungsfinger mittels eines motorischen Antriebs, beispielsweise in Form von Elektromotoren, wie z.B. Servomotoren oder dergleichen, gesteuert bewegbar sind. Darüber hinaus sind z.B. auch fluidische, wie pneumatische, hydraulische oder hydropneumatische, motorische Antriebe, beispielsweise in Form von Hydraulikmotoren, denkbar.

In diesem Zusammenhang kann in vorteilhafter Ausgestaltung vorgesehen sein, dass die Betätigungseinrichtung eine elektronische Steuereinheit, wie eine CPU-Einheit, umfasst, welche mit dem motorischen Antrieb der Betätigungsfinger in Wirkverbindung steht, um diese entsprechend der in automatisierter Weise oder mittels in ein Bedienmodul der Steuereinheit eingebbaren Befehlen entsprechend der jeweils gewünschten Dosiermenge zu betätigen. Die Steuereinheit kann dabei insbesondere ferner mit einer Wiegeeinrichtung in Wirkverbindung stehen, um die Betätigungsfinger entsprechend der gewünschten Dosiermenge zu betätigen bzw. um diese wieder auseinander zu bewegen und hierdurch die Auslassöffnung des Auslassstutzens infolge elastischer Rückstellung der Klammer zu schließen, sobald die gewünschte Dosiermenge mittels der Wiegeeinrichtung gravimetrisch erfasst worden ist. Die Wiegeeinrichtung kann z.B. entweder dem mit dem Auslassstutzen versehenen Vorratsbehälter zugeordnet sein, um die diesem entnommene Masse an fließfähigem Feststoff zu erfassen, oder sie kann einem Sammelbehälter zugeordnet sein, welchem der fließfähige Feststoff zudosiert wird, um die diesem aufgegebene Masse an fließfähigem Feststoff zu erfassen. Sie kann ferner entweder drahtlos oder mittels Kabel mit der Steuereinheit der Dosiereinheit in Verbindung stehen.

In weiterhin vorteilhafter Ausgestaltung kann vorgesehen sein, dass die Betätigungsfinger der Betätigungseinrichtung mittels ihres motorischen Antriebs in verschiedene Abstände voneinander überführbar sind, um unterschiedliche Öffnungsweiten der im Wesentlichen schlitzförmigen Auslassöffnung des Auslassstutzens einzustellen, wie z.B. eine oder mehrere geringe Öffnungsweite(n) zwecks einer Feindosierung (der Abstand der Betätigungsfinger ist nur geringfügig kleiner als die Länge der an dem Auslassstutzen montierten Klammer im Ruhezustand) bzw. eine oder mehrere große Öffnungsweite(n) zwecks einer Grobdosierung (der Abstand der Betätigungsfinger ist erheblich kleiner als die Länge der an dem Auslassstutzen montierten Klammer im Ruhezustand).

Darüber hinaus kann in vorteilhafter Ausgestaltung vorgesehen sein, dass die Betätigungsfinger der Betätigungseinrichtung mittels ihres motorischen Antriebs in eine Oszillationsbewegung, insbesondere mit voreinstellbarer Amplitude, versetzbar sind, um während eines Dosiervorgangs bei in eine Öffnungsstellung versetzter Auslassöffnung des Auslassstutzens für einen verbesserten Austrag der dosierten, fließfähigen Feststoffe zu sorgen. Bei der Oszillationsbewegung kann es sich insbesondere um eine Schwingungsbewegung handeln, vorzugsweise in Bewegungsrichtung der Betätigungsfinger aufeinander zu und voneinander fort, so dass die Fließfähigkeit der pulver- und/oder partikelfähigen Feststoffe während des Dosiervorgangs erhöht wird und diese stets "nachrutschen" können, ohne dass es zu einer Unterbrechung des Materialflusses kommt und ohne dass der mit dem Auslassstutzen versehene Vorratsbehälter insbesondere mit einem Rührwerk ausgestattet sein muss.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische perspektivische Ansicht einer Ausführungsform eines Auslassstutzens einer erfindungsgemäßen Dosiereinheit mit an dessen im Wesentlichen schlitzförmige Auslassöffnung außenseitig aufgebrachter Klammer;
- Fig. 2: eine schematische Draufsicht auf den Auslassstutzen gemäß Fig. 1 von oben;
- Fig. 3: eine schematische Draufsicht auf den mit der Klammer versehenen Auslassstutzen gemäß Fig. 1 und 2 von unten;
- Fig. 4: eine der Fig. 1 entsprechende schematische perspektivische Ansicht des Auslassstutzens ohne die Klammer;
- Fig. 5: eine schematische Draufsicht auf die Klammer gemäß Fig. 1 bis 3 im demontierten, unverformten Zustand;
- Fig. 6: eine schematische perspektivische Ansicht der Klammer gemäß Fig. 5 im demontierten, unverformten Zustand;
- Fig. 7: eine der Fig. 5 entsprechende schematische Draufsicht auf die Klammer gemäß Fig. 5 und 6 in einem elastisch verformten Zustand, wie er dem an dem Auslassstutzen montierten Zustand der Klammer gemäß Fig. 1 bis 3 entspricht;
- Fig. 8: eine der Fig. 6 entsprechende schematische perspektivische Ansicht der Klammer gemäß Fig. 7 in einem elastisch verformten Zustand, wie er dem an dem Auslassstutzen montierten Zustand der Klammer gemäß Fig. 1 bis 3 entspricht;
- Fig. 9: eine schematische perspektivische Ansicht des Auslassstutzens mit an dessen im Wesentlichen schlitzförmige Auslassöffnung außenseitig aufgebrachter Klammer im Ruhezustand (keine Dosierung);
- Fig. 10: eine schematische Draufsicht auf den mit der Klammer versehenen Auslassstutzen von unten in der Situation gemäß Fig. 9 (keine Dosierung);
- Fig. 11: eine der Fig. 9 entsprechende schematische perspektivische Ansicht des Auslassstutzens mit an dessen im Wesentlichen schlitzförmige Auslassöffnung außenseitig aufgebrachter Klammer, wobei die Klammer infolge etwa in Erstreckungsrichtung ihrer Schenkel einwirkender Druckkräfte elastisch verformt worden ist, um die Auslassöffnung in eine Öffnungsstellung mit kleinem Öffnungsquerschnitt zu versetzen (Feindosierung);
- Fig. 12: eine schematische Draufsicht auf den mit der Klammer versehenen Auslassstutzen von unten in der Situation gemäß Fig. 11 (Feindosierung);
- Fig. 13: eine den Fig. 9 und 11 entsprechende schematische perspektivische Ansicht des Auslassstutzens mit an dessen im Wesentlichen schlitzförmige Auslassöffnung außenseitig aufgebrachter Klammer, wobei die Klammer infolge höherer, etwa in Erstreckungsrichtung ihrer Schenkel einwirkender Drucckräfte elastisch verformt worden ist, um die Auslassöffnung in eine Öffnungsstellung mit großem Öffnungsquerschnitt zu versetzen (Grobdosierung);
- Fig. 14: eine schematische Draufsicht auf den mit der Klammer versehenen Auslassstutzen von unten in der Situation gemäß Fig. 13 (Grobdosierung);
- Fig. 15: eine schematische perspektivische Ansicht einer Ausführungsform einer Betätigungseinrichtung einer erfindungsgemäßen Dosiereinheit in einer Betriebssituation vor oder nach dem Dosieren von fließfähigem Feststoff aus dem mit der Klammer versehenen Auslassstutzen; und
- Fig. 16: eine der Fig. 15 entsprechende schematische perspektivische Ansicht der Betätigungseinrichtung in einer Betriebssituation während des Dosierens von fließfähigem Feststoff aus dem mit der Klammer versehenen Auslassstutzen.

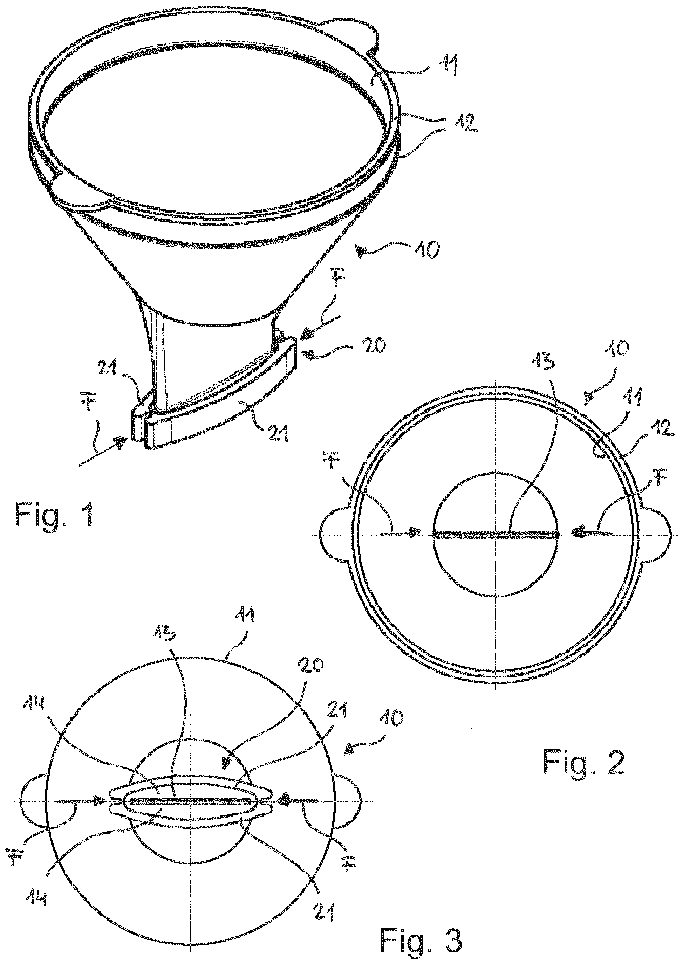

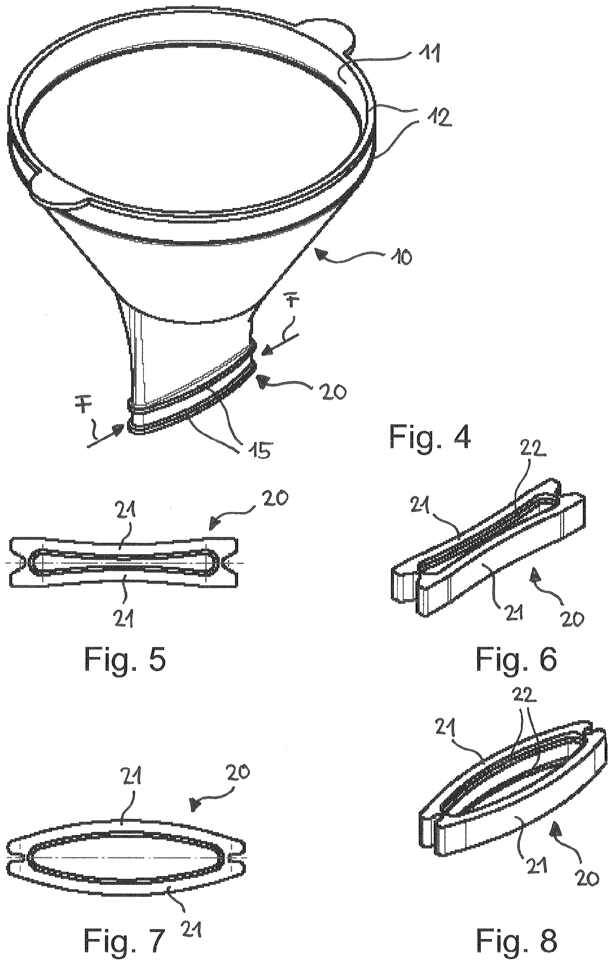

Während in den Fig. 1 bis 3 eine Ausführungsform eines insgesamt mit dem Bezugszeichen 10 versehenen Auslassstutzens einer erfindungsgemäßen Dosiereinheit für pulver- oder partikelförmige, fließfähige Feststoffe wiedergegeben ist, an welchem bereits eine Klammer 20 montiert worden ist, ist in der Fig. 4 derselbe Auslassstutzen 10 ohne Klammer und in den Fig. 5 bis 8 nur die Klammer 20 einerseits im unverformten, demontierten Zustand (Fig. 5 und 6), andererseits in einem elastisch verformten Zustand gezeigt (Fig. 7 und 8), wie er dem an dem Auslassstutzen 10 montierten Zustand der Klammer 20 gemäß den Fig. 1 bis 3 entspricht. Der Auslassstutzen 10 ist aus einem ersten nachgiebig elastisch verformbaren Kunststoffmaterial, z.B. aus einem, vorzugsweise thermoplastischen, Polyurethanelastomer, gefertigt, wobei er bei dem zeichnerisch dargestellten Ausführungsbeispiel einstückig hieraus geformt und beispielsweise als Spritzguss- oder Guss-Formteil ausgestaltet ist. Die Klammer 20 ist aus einem zweiten, gleichfalls nachgiebig elastischen Kunststoffmaterial, z.B. ebenfalls aus einem vorzugsweise thermoplastischen Polyurethanelastomer, gefertigt und beim vorliegenden Ausführungsbeispiel ebenfalls einstückig hieraus geformt. Bei dem ersten nachgiebig elastischen Kunststoffmaterial des Auslassstutzens 10 kann es sich um denselben Werkstoff wie das zweite nachgiebig elastische Kunststoffmaterial der Klammer 20 handeln, oder letzteres weist gegenüber jenem des Auslassstutzens 10 einen größeren Elastizitätsmodul auf, so dass das nachgiebig elastische Material der Klammer 20 zu seiner elastischen Verformung größere Verformungskräfte als jenes des Auslassstutzens 10 erfordert bzw. demgegenüber etwas "starrer" ist (vgl. hierzu auch weiter unten).

Wie insbesondere den Fig. 1 bis 4 zu entnehmen ist, weist der Auslassstutzen 10 an seinem einen, in den Fig. 1 und 4 oberen Ende eine Einlassöffnung 11 auf, welche beispielsweise einen runden - hier einen etwa kreisrunden - Querschnitt besitzt und zum Festlegen am Auslass eines nicht zeichnerisch dargestellten Vorratsbehälters dient, welcher gemäß dem Stand der Technik ausgestaltet sein kann und zur Bevorratung eines fließfähigen Feststoffes dient. Um den Auslassstutzen 10 insbesondere lösbar am Auslass eines solchen Vorratsbehälters festlegen zu können, ist die Einlassöffnung 11 an ihrem Außenumfang mit Befestigungsstrukturen 12 ausgestattet, welche beim vorliegenden Ausführungsbeispiel zwei parallel verlaufende Umfangsvorsprünge umfassen und beispielsweise eine Rohrschelle (nicht gezeigt) im Wesentlichen formschlüssig zwischen sich aufnehmen können, um den Auslassstutzen 10 an seiner Einlassöffnung 11 sowohl form- als auch kraftschlüssig, aber gleichwohl lösbar am Auslass des Vorratsbehälters befestigen zu können.

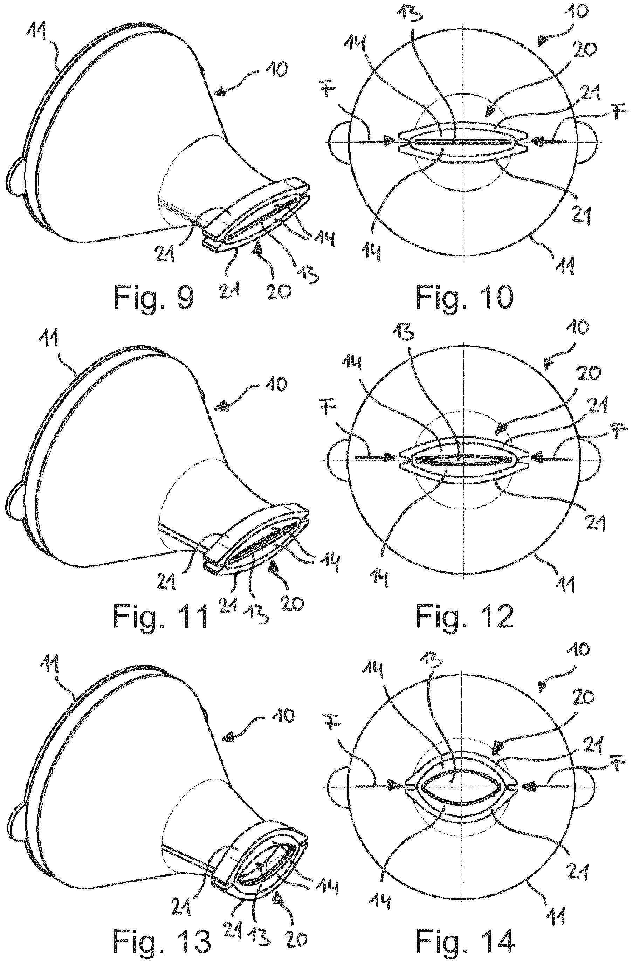

Von seiner Einlassöffnung 11 verjüngt sich der Auslassstutzen 10 im Wesentlichen trichterförmig nach unten in Richtung einer am entgegengesetzten Ende der Einlassöffnung 11 angeordneten Auslassöffnung 13, welche im Wesentlichen schlitzförmig ausgestaltet (vgl. insbesondere die Fig. 2 und 3) und zwischen zwei entgegengesetzten Dichtlippen 14 (vgl. die Fig. 3) des Auslassstutzens 10 gebildet ist. Die die im Wesentlichen schlitzförmige Auslassöffnung 13 zwischen sich begrenzenden Dichtlippen 14 besitzen einen in Bezug auf die Auslassöffnung 13 konvexen, z.B. etwa kreisbogenförmigen Außenumfang und vermögen gegebenenfalls infolge ihrer elastischen Nachgiebigkeit die Auslassöffnung 13 zumindest geringfügig in ihre Schließstellung gemäß den Fig. 2 und 3, in welcher die Dichtlippen 14 zur im Wesentlichen gänzlichen Anlage aneinander gelangen, elastisch vorzubelasten. Wird auf die im Wesentlichen schlitzförmige Auslassöffnung 13 bzw. auf die diese zwischen sich bildenden Dichtlippen 14 eine etwa in Erstreckungsrichtung der schlitzförmigen Auslassöffnung 13 einwirkende Druckkraft ausgeübt, wie es in den Fig. 1 bis 4 mit dem Bezugszeichen F angedeutet ist, so lässt sich die Auslassöffnung 13 in eine Öffnungsstellung überführen, indem die Dichtlippen 14 auseinander gespreizt bzw. voneinander fort bewegt werden, wobei der Öffnungsquerschnitt der im Wesentlichen schlitzförmigen Auslassöffnung 13 mit zunehmender Krafteinwirkung größer wird (vgl. hierzu auch die weiter unten erläuterten Fig. 9 bis 14).

Wie weiterhin insbesondere aus den Fig. 1 bis 4 hervorgeht, ist die im Wesentlichen schlitzförmige Auslassöffnung 13 des Auslassstutzens 10 zum Zwecke eines optimalen Schließvermögens auch nach lange andauerndem Betrieb, ohne dass die Gefahr einer Kontamination der zu dosierenden fließfähigen Feststoffe besteht, mittels der als separates Bauteil ausgebildeten Klammer 20 elastisch in ihre Schließstellung vorbelastet, wobei die Klammer 20 an dem konvexen Außenumfang der die Auslassöffnung 13 zwischen sich bildenden Dichtlippen 14 lösbar aufgebracht ist. Die elastische Vorbelastung der zwischen den Dichtlippen 14 gebildeten, im Wesentlichen schlitzförmigen Auslassöffnung 13 des Auslassstutzens 10 in Richtung der Schließstellung mittels der hierauf außenseitig aufgebrachten Klammer 20 geschieht dabei derart, dass die im montierten Zustand gemäß den Fig. 1 bis 3 außenseitig den Dichtlippen 14 anliegenden Schenkel 21 der nachgiebig elastischen Klammer 20 in Richtung ihrer einander angenäherten Stellung elastisch vorbelastet sind, so dass sie die Dichtlippen 14 zwischen sich entlang der gesamten Länge der im Wesentlichen schlitzförmigen Auslassöffnung 13 gegeneinander andrücken. Werden die Schenkel 21 der Klammer 20 hingegen mit Druckkräften beaufschlagt, welche etwa in ihrer Erstreckungsrichtung, d.h. auch etwa in Erstreckungsrichtung der Dichtlippen 14 und der zwischen diesen gebildeten schlitzförmigen Auslassöffnung 13, auf die Klammer 20 einwirken, wie es in den Fig. 1 bis 4 mit dem Bezugszeichen F angedeutet ist, so werden die beiden Schenkel 21 der Klammer 20 voneinander fort bewegt bzw. auseinander gespreizt, wobei zugleich die Dichtlippen 14 des Auslassstutzens 10 in der oben beschriebenen Weise auseinander gespreizt werden und die schlitzförmige Auslassöffnung 13 folglich in eine Öffnungsstellung überführt wird, deren Öffnungsquerschnitt durch den Betrag der einwirkenden Druckkräfte F eingestellt werden kann (vgl. auch die Fig. 9 bis 14).

Um für die elastische Vorbelastung der Dichtlippen 14 aufeinander zu, also in Richtung der Schließstellung der zwischen den Dichtlippen 14 gebildeten, im Wesentlichen schlitzförmigen Auslassöffnung 13 zu sorgen, besitzen die Schenkel 21 der Klammer 20 im unbelasteten, demontierten Zustand einen gegenüber dem konvex gekrümmten Außenumfang der Dichtlippen 14 zumindest geringer konvex gekrümmten Innenumfang, wobei sie im vorliegenden Fall sogar einen geringfügig konkav gekrümmten Innenumfang aufweisen. Dies wird insbesondere aus den Fig. 5 und 6 deutlich, welche die Klammer 20 im unbelasteten Zustand zeigen. Wird die Klammer 20 folglich an dem konvex gekrümmten Außenumfang der die Auslassöffnung 13 zwischen sich bildenden Dichtlippen 14 des Auslassstutzens 10 montiert (vgl. die Fig. 1 bis 3), so müssen die Schenkel 21 der Klammer 20 dabei entlang des konvexen Außenumfangs der Dichtlippen auseinander gespreizt werden, wodurch sich die nachgiebig elastische Vorbelastung der Dichtlippen 14 aufeinander zu, d.h. in Richtung der Schließstellung der Auslassöffnung 13 ergibt. Die auseinander gespreizte Stellung der Schenkel 21 der Klammer 20 zum Zwecke der elastischen Vorbelastung ist aus Veranschaulichungsgründen nochmals in den Detailansichten gemäß Fig. 7 und 8 gezeigt. Die Klammer 20 ist hierbei vorteilhaferweise im Wesentlichen ringförmig ausgestaltet, so dass sie im montierten Zustand (vgl. die Fig. 1 bis 3) die die Auslassöffnung 13 zwischen sich bildenden Dichtlippen 14 vollumfänglich umgreift.

Insbesondere in den Fig. 4 und Fig. 8 ist ferner erkennbar, dass die Klammer 20 nicht nur kraftschlüssig, sondern auch formschlüssig am Außenumfang der Dichtlippen 14 des Auslassstutzens 10 montierbar ist, wobei sie zu diesem Zweck mit inneren Eingriffsstrukturen 22 ausgestattet ist, welche zu äußeren Eingriffsstrukturen 15 der Dichtlippen 14 komplementär sind. Während die äußeren Eingriffsstrukturen 15 der Dichtlippen 14 im vorliegenden Fall in Form eines Paares von Umfangsvorsprüngen ausgestaltet sind, sind die hierzu komplementären inneren Eingriffsstrukturen 22 der Klammer 20 in Form eines Paares von Umfangsnuten gebildet, wobei selbstverständlich auch beliebige andere bekannte Eingriffsstrukturen denkbar sind.

Während in den Fig. 9 und 10 nochmals die Schließstellung der im Wesentlichen schlitzförmigen Auslassöffnung 13 des Auslassstutzens 10 schematisch wiedergegeben ist, zeigen die Fig. 11 bis 14 exemplarisch verschiedene Öffnungsstellungen der im Wesentlichen schlitzförmigen Auslassöffnung 13 in Abhängigkeit von entgegen der nachgiebig elastischen Vorbelastung der Schenkel 21 der Klammer 20 aufeinander zu einwirkenden Druckkräften F. Während in den Fig. 9 und 10 keine Druckkräfte F ausgeübt werden (F = 0), so dass sich die schlitzförmige Auslassöffnung 13 in ihrer Schließstellung befindet, werden in den Fig. 11 und 12 nur relativ geringe Druckkräfte F ausgeübt, so dass die schlitzförmige Auslassöffnung 13 nur geringfügig öffnet, wie es z.B. zum Feindosieren zweckmäßig ist. Demgegenüber werden in den Fig. 13 und 14 höhere Druckkräfte F ausgeübt, so dass sich die schlitzförmige Auslassöffnung 13 (deutlich) weiter öffnet, wie es z.B. zum Grobdosieren zweckdienlich ist.

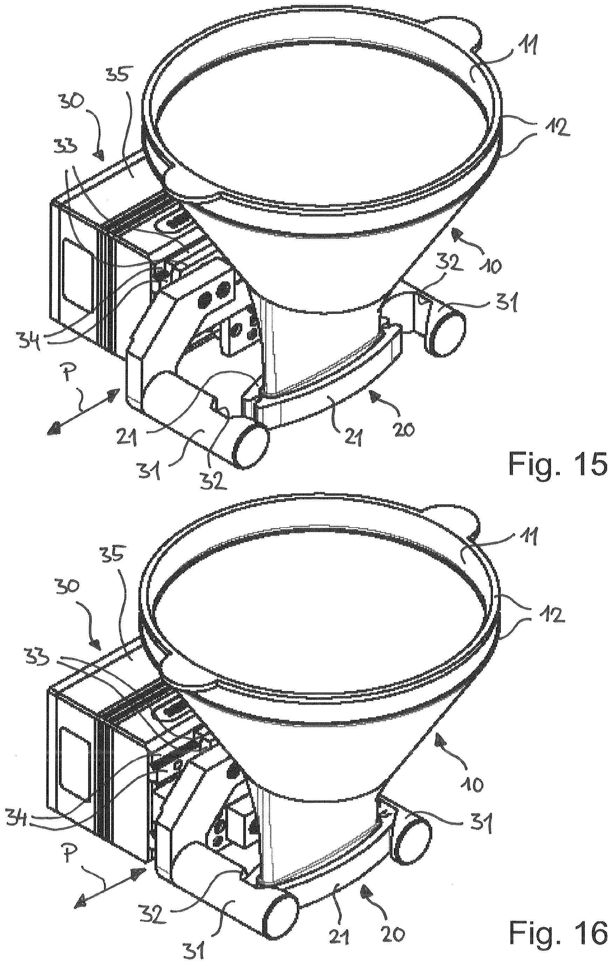

In den Fig. 15 und 16 ist schließlich eine Ausführungsform einer Betätigungseinrichtung 30 der Dosiereinheit dargestellt, welche zum Aufbringen der Druckkräfte F (vgl. die Fig. 1 bis 4, 10, 12 und 14) auf die Klammer 20, welche am Außenumfang der die Auslassöffnung 13 des Auslassstutzens 10 begrenzenden Dichtlippen 14 des Auslassstutzens 10 aufgebracht worden ist, etwa in Erstreckungsrichtung der außenseitig den Dichtlippen 14 anliegenden Schenkeln 21 der Klammer 20 dient, um die Schenkel 21 der Klammer 20 elastisch voneinander fort zu bewegen und dabei die im Wesentlichen schlitzförmige Auslassöffnung 13 des Auslassstutzens 10 von ihrer Schließstellung in eine Öffnungsstellung zu überführen. Die Betätigungseinrichtung 30 weist zu diesem Zweck zwei in Richtung des Pfeils P aufeinander zu und voneinander fort bewegbare Betätigungsfinger 31 auf, welche im vorliegenden Fall z.B. an ihren einander zugewandten Seiten mit je einem Eingriffsprofil 32 versehen sind, welche im Wesentlichen komplementär zur Außenkontur der einander entgegengesetzten Enden der Klammer 20 ausgestaltet sind. Zur Hin- und Herbewegung der Betätigungsfinger 31 aufeinander zu und voneinander fort sind letztere beispielsweise an je einem Schlitten 33 festgelegt, welcher entlang je einer Führung 34 - hier in Form einer Linearführung - verschieblich geführt ist, so dass sich eine translatorische Bewegung der Betätigungsfinger 31 ergibt (vgl. den Pfeil P der Fig. 15 und 16). Während sich die Betätigungsfinger 31 der Betätigungseinrichtung 30 in der Fig. 16 in einer Dosierposition befinden (ihr Abstand voneinander ist kleiner als die Länge der Klammer 20, so dass letztere elastisch komprimiert und hierdurch die im Wesentlichen schlitzförmige Auslassöffnung 13 des Auslassstutzens 10 in eine Öffnungsstellung überführt worden ist), befinden sich die Betätigungsfinger 31 in der Fig. 15 in einer Ruheposition vor oder nach einem Dosiervorgang (ihr Abstand ist größer als die Länge der Klammer 20, so dass hierauf keine Druckkräfte ausgeübt werden).

Die Betätigungsfinger 31 sind bei dem gezeigten Ausführungsbeispiel mittels je eines oder eines gemeinsamen motorischen Antriebs, z.B. in Form eines Elektromotors, gesteuert bewegbar, welcher einen jeweiligen Schlitten 33, an welchem ein jeweiliger Betätigungsfinger 31 befestigt ist, antreibt und aufgrund seiner Unterbringung im Innern eines Gehäuses 35 der Betätigungseinrichtung 30 in den Fig. 15 und 16 nicht erkennbar ist. Die Betätigungseinrichtung 30 kann ferner vorzugsweise eine elektronische Steuereinheit (ebenfalls nicht erkennbar) umfassen, welche mit dem motorischen Antrieb der Betätigungsfinger 31 in Wirkverbindung steht, um letztere gemäß dem gewünschten Öffnungsquerschnitt der Auslassöffnung 13 des Auslassstutzens 10 (vgl. hierzu die Fig. 9 bis 14) anzutreiben, d.h. die Betätigungsfinger 31 in den jeweils gewünschten Abstand voneinander zu überführen, wie er der jeweils gewünschten Öffnungsweite der im Wesentlichen schlitzförmigen Auslassöffnung 13 des Auslassstutzens 10 entspricht. Die Steuereinheit steht ferner zweckmäßigerweise mit einer als solchen bekannten Wiegeeinrichtung (ebenfalls nicht zeichnerisch dargestellt) in Wirkverbindung, um die Betätigungsfinger 31 entsprechend der gewünschten Dosiermenge zu betätigen, wobei die Betätigungsfinger 31 insbesondere wieder auseinander von der Klammer 20 fort bewegt werden, sobald die gewünschte Dosiermenge gravimetrisch erfasst worden ist. Wie bereits weiter oben erwähnt, kann die Wiegeeinrichtung dabei entweder dem Vorratsbehälter (nicht gezeigt), an dessen Auslass der Auslassstutzen 10 festgelegt ist und aus welchem der fließfähige Feststoff entnommen wird, oder einem Sammelbehälter (nicht gezeigt), in welchen der fließfähige Feststoff aufgegeben wird, zugeordnet sein.

Schließlich kann vorteilhafterweise ferner vorgesehen sein, dass die Betätigungsfinger 31 während eines Dosiervorgangs, wie er in der Fig. 16 erkennbar ist, mittels ihres motorischen Antriebs in eine Oszillationsbewegung, insbesondere mit voreinstellbarer Amplitude, versetzbar sind, um während des Dosiervorgangs bei in eine Öffnungsstellung versetzter Auslassöffnung 13 des Auslassstutzens 10 für einen verbesserten Austrag der dosierten, fließfähigen Feststoffe zu sorgen, indem die Oszillationsbewegung für eine Agitation der pulver- und/oder partikelförmigen Feststoffe sorgt, so dass diese stets nachfließen und nicht ins Stocken geraten. Die Oszillationsbewegung der Betätigungsfinger 31 in Form einer Hin- und Herbewegung mit kleiner Amplitude kann sich vorzugsweise in derselben Richtung wie die Bewegung der Betätigungsfinger 31 aufeinander zu und voneinander fort (Pfeil P) vollziehen, so dass sie mittels desselben Motors des Antriebs, welcher die Schlitten 33 entlang der Führungen 34 antreibt, vonstatten gehen kann und keinen zusätzlichen Motor erfordert.

## Patentansprüche

1. Dosiereinheit für fließfähige Feststoffe, mit einem aus einem ersten nachgiebig elastischen Material geformten Auslassstutzen (10), welcher an seinem einen Ende eine zum Festlegen am Auslass eines Vorratsbehälters ausgebildete Einlassöffnung (11) und an seinem anderen Ende eine zwischen zwei entgegengesetzten Dichtlippen (14) des Auslassstutzens (10) gebildete, im Wesentlichen schlitzförmige Auslassöffnung (13) aufweist, welche in Richtung ihrer Schließstellung elastisch vorbelastet ist und infolge etwa in ihrer Erstreckungsrichtung einwirkender Druckkräfte (F) entgegen ihrer elastischen Vorbelastung in eine Öffnungsstellung überführbar ist, **dadurch gekennzeichnet, dass** die im Wesentlichen schlitzförmige Auslassöffnung (13) des Auslassstutzens (10) mittels einer separaten, lösbar am Außenumfang der die Auslassöffnung (13) begrenzenden Dichtlippen (14) aufbringbaren Klammer (20) aus einem zweiten nachgiebig elastischen Material elastisch in ihre Schließstellung vorbelastet ist, wobei die im montierten Zustand außenseitig den Dichtlippen (14) anliegenden Schenkel (21) der Klammer (20) in Richtung ihrer aneinander angenäherten Stellung elastisch vorbelastet und infolge der etwa in ihrer Erstreckungsrichtung einwirkenden Drucckräfte (F) elastisch voneinander fort bewegbar sind.

2. Dosiereinheit nach Anspruch 1, **dadurch gekennzeichnet, dass** die zwischen den Dichtlippen (14) gebildete, im Wesentlichen schlitzförmige Auslassöffnung (13) allein aufgrund des elastischen Rückverformungsverhaltens des ersten elastisch nachgiebigen Materials des Auslassstutzens (10) in Richtung ihrer Schließstellung elastisch vorbelastet ist.

3. Dosiereinheit nach Anspruch 1 oder 2, **dadurch gekennzeichnet, dass**
- die die Auslassöffnung (13) des Auslassstutzens (10) zwischen sich bildenden Dichtlippen (14) einen zumindest abschnittsweise konvex gekrümmten Außenumfang besitzen, und
- die Schenkel (21) der Klammer (20) in deren demontiertem Zustand einen demgegenüber geringer konvex gekrümmten, im Wesentlichen geradlinigen oder konkav gekrümmten Innenumfang besitzen.

4. Dosiereinheit nach einem der Ansprüche 1 bis 3, **dadurch gekennzeichnet, dass** die Klammer (20) im Wesentlichen ringförmig ausgestaltet ist und im montierten Zustand die die Auslassöffnung (13) des Auslassstutzens (10) zwischen sich bildenden Dichtlippen (14) vollumfänglich umgreift.

5. Dosiereinheit nach einem der Ansprüche 1 bis 4, **dadurch gekennzeichnet, dass** die Klammer (20)
- kraftschlüssig am Außenumfang der die Auslassöffnung (13) des Auslassstutzens (10) begrenzenden Dichtlippen (14) aufbringbar ist, und/oder
- formschlüssig am Außenumfang der die Auslassöffnung (13) des Auslassstutzens (10) begrenzenden Dichtlippen (14) aufbringbar ist, wobei die Klammer (20) insbesondere mit inneren Eingriffsstrukturen (22) ausgestattet ist, welche zu äußeren Eingriffsstrukturen (15) der Dichtlippen (14) komplementär sind.

6. Dosiereinheit nach einem der Ansprüche 1 bis 5, **dadurch gekennzeichnet, dass** sich der Auslassstutzen (10) von seiner Einlassöffnung (11) in Richtung seiner im Wesentlichen schlitzförmigen Auslassöffnung (13) etwa trichterförmig verjüngt.

7. Dosiereinheit nach einem der Ansprüche 1 bis 6, **dadurch gekennzeichnet, dass** die Einlassöffnung (11) des Auslassstutzens (10) lösbar an dem Vorratsbehälter befestigbar ist, wobei die Einlassöffnung (11) insbesondere an ihrem Außenumfang mit Befestigungsstrukturen (12) versehen ist, welche zum kraft- und/oder formschlüssigen Anbringen einer Rohrschelle oder dergleichen dienen.

8. Dosiereinheit nach einem der Ansprüche 1 bis 7, **dadurch gekennzeichnet, dass** es sich bei dem ersten nachgiebig elastischen Material des Auslassstutzens (10) um ein erstes elastomeres Kunststoffmaterial handelt, wobei der Auslassstutzen (10) insbesondere einstückig aus dem ersten elastomeren Kunststoffmaterial gebildet ist.

9. Dosiereinheit nach Anspruch 8, **dadurch gekennzeichnet, dass** der Auslassstutzen (10) als Spritzguss-Formteil oder Guss-Formteil aus dem ersten nachgiebig elastischen elastomeren Kunststoffmaterial geformt ist.

10. Dosiereinheit nach einem der Ansprüche 1 bis 9, **dadurch gekennzeichnet, dass** es sich bei dem zweiten nachgiebig elastischen Material der Klammer (20) um ein zweites elastomeres Kunststoffmaterial handelt, wobei insbesondere
- die Klammer (20) einstückig aus dem zweiten elastomeren Kunststoffmaterial gebildet ist, und/oder
- das zweite elastisch nachgiebige Material der Klammer (20) einen größeren Elastizitätsmodul aufweist als das erste elastisch nachgiebige Material des Auslassstutzens (10).

11. Dosiereinheit nach einem der Ansprüche 1 bis 10, **dadurch gekennzeichnet, dass** sie ferner eine Betätigungseinrichtung (30) umfasst, welche zum Aufbringen von Druckkräften (F) auf die am Außenumfang der die Auslassöffnung (13) des Auslassstutzens (10) begrenzenden Dichtlippen (14) aufgebrachte Klammer (20) etwa in Erstreckungsrichtung deren außenseitig den Dichtlippen (14) anliegenden Schenkeln (21) ausgebildet ist, um die Schenkel (21) der Klammer (20) elastisch voneinander fort zu bewegen und dabei die im Wesentlichen schlitzförmige Auslassöffnung (13) des Auslassstutzens (10) von ihrer Schließstellung in eine Öffnungsstellung zu überführen.

12. Dosiereinheit nach Anspruch 11, **dadurch gekennzeichnet, dass** die Betätigungseinrichtung (30) zwei aufeinander zu und voneinander fort bewegbare Betätigungsfinger (31) aufweist, welche zum Aufbringen der Druckkräfte auf die am Außenumfang der die Auslassöffnung (13) des Auslassstutzens (10) begrenzenden Dichtlippen (14) aufgebrachten Klammer (20) dienen, wobei die Betätigungsfinger (31) der Betätigungseinrichtung (30) insbesondere an ihren einander zugewandten Seiten mit je einem Eingriffsprofil (32) versehen sind, welche im Wesentlichen komplementär zur Außenkontur der einander entgegengesetzten Enden der Klammer (20) ausgestaltet sind.

13. Dosiereinheit nach Anspruch 12, **dadurch gekennzeichnet, dass** die Betätigungsfinger (31) mittels eines motorischen Antriebs gesteuert bewegbar sind.

14. Dosiereinheit nach Anspruch 13, **dadurch gekennzeichnet, dass** die Betätigungseinrichtung (30) eine elektronische Steuereinheit umfasst, welche mit dem motorischen Antrieb der Betätigungsfinger (31) in Wirkverbindung steht, wobei die Steuereinheit insbesondere ferner mit einer Wiegeeinrichtung in Wirkverbindung steht, um die Betätigungsfinger (31) entsprechend der gewünschten Dosiermenge zu betätigen.

15. Dosiereinheit nach Anspruch 13 oder 14, **dadurch gekennzeichnet, dass** die Betätigungsfinger (31) mittels ihres motorischen Antriebs
- in verschiedene Abstände voneinander überführbar sind, um unterschiedliche Öffnungsweiten der im Wesentlichen schlitzförmigen Auslassöffnung (13) des Auslassstutzens (10) einzustellen; und/oder
- in eine Oszillationsbewegung, insbesondere mit voreinstellbarer Amplitude, versetzbar sind, um während eines Dosiervorgangs bei in eine Öffnungsstellung versetzter Auslassöffnung (13) des Auslassstutzens (10) für einen verbesserten Austrag der dosierten, fließfähigen Feststoffe zu sorgen.

## Claims

1. Metering unit for flowable solids, having an outlet nozzle (10) which is moulded from a first flexibly elastic material and has at one end an inlet opening (11), which is designed for fixing on the outlet of a storage container, and at its other end a substantially slot-shaped outlet opening (13), which is formed between two opposite sealing lips (14) of the outlet nozzle (10) and is elastically preloaded in the direction of its closed position and can be transferred against its elastic preloading to an open position as a result of compressive forces (F) which act approximately in its direction of extent, **characterized in that** the substantially slot-shaped outlet opening (13) of the outlet nozzle (10) is elastically preloaded into its closed position by means of a separate clamp (20) made from a second flexibly elastic material, which can be mounted releasably on the outer circumference of the sealing lips (14) bounding the outlet opening (13), wherein the legs (21) of the clamp (20), which rest on the outside of the sealing lips (14) in the mounted state, are elastically preloaded in the direction of the position in which they are close together and can be moved elastically away from one another as a result of the compressive forces (F) which act approximately in their direction of extent.

2. Metering unit according to Claim 1, **characterized in that** the substantially slot-shaped outlet opening (13) formed between the sealing lips (14) is elastically preloaded in the direction of its closed position solely on account of the elastic reverse deformation behaviour of the first elastically flexible material of the outlet nozzle (10).

3. Metering unit according to Claim 1 or 2, **characterized in that**
- the sealing lips (14) forming the outlet opening (13) of the outlet nozzle (10) between them have an outer circumference which is convexly curved at least in some section or sections, and
- the legs (21) of the clamp (20) have an inner circumference in the unmounted state thereof which is convexly curved to a lesser extent than this, is substantially rectilinear or concavely curved.

4. Metering unit according to any of Claims 1 to 3, **characterized in that** the clamp (20) is of substantially annular design and, in the mounted state, completely surrounds the sealing lips (14) forming the outlet opening (13) of the outlet nozzle (10) between them.

5. Metering unit according to any of Claims 1 to 4, **characterized in that** the clamp (20)
- can be mounted non-positively on the outer circumference of the sealing lips (14) bounding the outlet opening (13) of the outlet nozzle (10), and/or
- can be mounted positively on the outer circumference of the sealing lips (14) bounding the outlet opening (13) of the outlet nozzle (10), wherein the clamp (20) is equipped, in particular, with inner engagement structures (22) which are complementary to outer engagement structures (15) of the sealing lips (14).

6. Metering unit according to any of Claims 1 to 5, **characterized in that** the outlet nozzle (10) tapers approximately in the shape of a funnel from its inlet opening (11) in the direction of its substantially slot-shaped outlet opening (13).

7. Metering unit according to any of Claims 1 to 6, **characterized in that** the inlet opening (11) of the outlet nozzle (10) can be releasably fastened to the storage container, wherein the inlet opening (11) is provided, in particular on its outer circumference, with fastening structures (12) which are used for the non-positive and/or positive attachment of a pipe clamp or the like.

8. Metering unit according to any of Claims 1 to 7, **characterized in that** the first flexibly elastic material of the outlet nozzle (10) is a first elastomeric polymer material, wherein the outlet nozzle (10) is formed, in particular integrally, from the first elastomeric polymer material.

9. Metering unit according to Claim 8, **characterized in that** the outlet nozzle (10) is moulded as an injectionmoulding or casting from the first flexibly elastic elastomeric polymer material.

10. Metering unit according to any of Claims 1 to 9, **characterized in that** the second flexibly elastic material of the clamp (20) is a second elastomeric polymer material, wherein, in particular,
- the clamp (20) is formed integrally from the second elastomeric polymer material, and/or
- the second elastically flexible material of the clamp (20) has a greater modulus of elasticity than the first elastically flexible material of the outlet nozzle (10) .

11. Metering unit according to any of Claims 1 to 10, **characterized in that** it furthermore comprises an actuating device (30) which is designed to apply compressive forces (F) to the clamp (20) mounted on the outer circumference of the sealing lips (14) bounding the outlet opening (13) of the outlet nozzle (10), approximately in the direction of extent of the legs (21) thereof which rest on the outside of the sealing lips (14), in order to move the legs (21) of the clamp (20) elastically away from one another and in the process to transfer the substantially slot-shaped outlet opening (13) of the outlet nozzle (10) from its closed position to an open position.

12. Metering unit according to Claim 11, **characterized in that** the actuating device (30) has two actuating fingers (31), which can be moved towards one another and away from one another and which serve to apply the compressive forces to the clamp (20) mounted on the outer circumference of the sealing lips (14) bounding the outlet opening (13) of the outlet nozzle (10), wherein, in particular, the actuating fingers (31) of the actuating device (30) are each provided on their mutually facing sides with an engagement profile (32), which is configured in a manner substantially complementary to the outer contour of the mutually opposite ends of the clamp (20).

13. Metering unit according to Claim 12, **characterized in that** the actuating fingers (31) can be moved in a controlled manner by means of a motor drive.

14. Metering unit according to Claim 13, **characterized in that** the actuating device (30) comprises an electronic control unit, which is operatively connected to the motor drive of the actuating fingers (31), wherein the control unit is, in particular, furthermore operatively connected to a weighing device in order to actuate the actuating fingers (31) in accordance with the desired metered quantity.

15. Metering unit according to Claim 13 or 14, **characterized in that** the actuating fingers (31)
- can be transferred to different distances from one another in order to set different opening widths of the substantially slot-shaped outlet opening (13) of the outlet nozzle (10); and/or
- can be set in an oscillatory movement, in particular with a pre-settable amplitude, in order to ensure improved discharge of the metered, flowable solids during a metering operation when the outlet opening (13) of the outlet nozzle (10) is set to an open position
by means of their motor drive.

## Revendications

1. Unité de dosage pour solides coulants, avec un raccord de sortie (10) formé à partir d'une première matière plastique souple, ladite unité comportant au niveau de sa première extrémité une ouverture d'admission (11) réalisée pour la fixation au niveau de la sortie d'un bac de réserve et au niveau de son autre extrémité une ouverture de sortie (13) pour l'essentiel en forme de fente formée entre deux lèvres étanches (14) opposées du raccord de sortie (10), ladite ouverture de sortie étant préchargée de façon élastique en direction de sa position de fermeture et pouvant être transférée dans une position d'ouverture en raison de forces de compression (F) agissant approximativement dans sa direction d'extension à l'encontre de sa précharge élastique, **caractérisée en ce que** l'ouverture de sortie (13) pour l'essentiel en forme de fente du raccord de sortie (10) est préchargée de façon élastique dans sa position de fermeture au moyen d'une attache (20) séparée qui est réalisée à partir d'une deuxième matière plastique souple et qui peut être placée de façon amovible au niveau de la périphérie extérieure des lèvres étanches (14) délimitant l'ouverture de sortie (13), les côtés (21) de l'attache (20) butant à l'état monté contre les lèvres étanches (14) sur le côté extérieur et se rapprochant l'un de l'autre étant préchargés de façon élastique et pouvant se déplacer davantage de façon élastique l'un par rapport à l'autre en raison des forces de compression (F) agissant approximativement dans leur direction d'extension.

2. Unité de dosage selon la revendication 1, **caractérisée en ce que** l'ouverture de sortie (13) pour l'essentiel en forme de fente formée entre les lèvres étanches (14) est préchargée de façon élastique uniquement sur la base du comportement de redressement élastique du premier matériau élastique souple du raccord de sortie (10) en direction de sa position de fermeture.

3. Unité de dosage selon la revendication 1 ou 2, **caractérisé en ce que** :
- les lèvres étanches (14) formant entre elles l'ouverture de sortie (13) du raccord de sortie (10) possèdent une périphérie extérieure incurvée au moins en partie de façon convexe entre elles ; et
- les côtés (21) de l'attache (20) possèdent à l'état démonté une périphérie intérieure légèrement incurvée de façon convexe, pour l'essentiel rectiligne ou incurvée de façon concave.

4. Unité de dosage selon l'une quelconque des revendications 1 à 3, **caractérisée en ce que** l'attache (20) est réalisée pour l'essentiel de forme annulaire et que l'ouverture de sortie (13) du raccord de sortie (10) attrape entièrement à l'état monté les lèvres étanches (14) se formant entre.

5. Unité de dosage selon l'une quelconque des revendications 1 à 4, **caractérisée en ce que** l'attache (20) :
- peut être amenée par complémentarité de forces au niveau de la périphérie extérieure des lèvres étanches (14) délimitant l'ouverture de sortie (13) du raccord de sortie (10) ; et/ou
- peut être amenée par complémentarité de formes au niveau de la périphérie extérieure des lèvres étanches (14) délimitant l'ouverture de sortie (13) du raccord de sortie (10), l'attache (20) étant notamment équipée de structures de mise en prise intérieures (22) complémentaires aux structures de mise en prise extérieures (15) des lèvres étanches (14).

6. Unité de dosage selon l'une quelconque des revendications 1 à 5, **caractérisée en ce que** le raccord de sortie (10) se rétrécit quelque peu en forme d'entonnoir depuis son ouverture d'admission (11) en direction de son ouverture de sortie (13) pour l'essentiel en forme de fente.

7. Unité de dosage selon l'une quelconque des revendications 1 à 6, **caractérisée en ce que** l'ouverture d'admission (11) du raccord de sortie (10) peut être fixée de façon amovible au bac de réserve, l'ouverture d'admission (11) étant notamment pourvue de structures de fixation (12) au niveau de sa périphérie extérieure qui servent à amener en complémentarité de forces et/ou de formes une coque tubulaire ou son équivalent.

8. Unité de dosage selon l'une quelconque des revendications 1 à 7, **caractérisée en ce que** la première matière plastique souple du raccord de sortie (10) est une première matière plastique élastomère, le raccord de sortie (10) étant notamment formé d'un seul tenant à partir de la première matière plastique élastomère.

9. Unité de dosage selon la revendication 8, **caractérisée en ce que** le raccord de sortie (10) prend la forme d'une pièce moulée par injection ou d'une pièce moulée par coulage à partir de la première matière plastique souple élastomère élastique.

10. Unité de dosage selon l'une quelconque des revendications 1 à 9, **caractérisée en ce que** la deuxième matière plastique souple de l'attache (20) est une deuxième matière plastique élastomère, notamment :
- l'attache (20) est formée d'un seul tenant à partir de la deuxième matière plastique élastomère ; et/ou
- la deuxième matière élastique souple de l'attache (20) présente un module d'élasticité plus important que la première matière élastique souple du raccord de sortie (10).

11. Unité de dosage selon l'une quelconque des revendications 1 à 10, **caractérisée en ce qu'**elle comprend en outre un dispositif d'actionnement (30) réalisé pour l'application de forces de compression (F) sur l'attache (20) placée au niveau de la périphérie extérieure des lèvres étanches (14) délimitant l'ouverture de sortie (13) du raccord de sortie (10) approximativement dans la direction d'extension de ses côtés (21) butant sur le côté extérieur contre les lèvres étanches (14), pour déplacer davantage de façon élastique les côtés (21) et ainsi transférer l'ouverture de sortie (13) pour l'essentiel en forme de fente du raccord de sortie (10) depuis sa position de fermeture jusque dans une position d'ouverture.

12. Unité de dosage selon la revendication 11, **caractérisée en ce que** le dispositif d'actionnement (30) comporte deux doigts d'actionnement (31) pouvant être davantage déplacés l'un vers l'autre ou loin l'un de l'autre et qui servent à appliquer les forces de compression sur l'attache (20) amenée au niveau de la périphérie extérieure des lèvres étanches (14) délimitant l'ouverture de sortie (13) du raccord de sortie (10), les doigts d'actionnement (31) du dispositif d'actionnement (30) étant notamment pourvus au niveau de leurs côtés orientés l'un vers l'autre de respectivement un profil de mise en prise (32) configuré pour l'essentiel de façon complémentaire au contour extérieur des extrémités opposées l'une par rapport à l'autre.

13. Unité de dosage selon la revendication 12, **caractérisée en ce que** les doigts d'actionnement (31) peuvent être déplacée de façon commandée à l'aide d'un entraînement motorisé.

14. Unité de dosage selon la revendication 13, **caractérisée en ce que** le dispositif d'actionnement (30) comprend une unité de commande électronique qui est en liaison active avec l'entraînement motorisé des doigts d'actionnement (31), l'unité de commande étant notamment en outre en liaison active avec un dispositif de pesée pour actionner les doigts d'actionnement (31) en fonction de la quantité de dosage souhaitée.

15. Unité de dosage selon la revendication 13 ou 14, **caractérisée en ce que** grâce à leur entraînement motorisé, les doigts d'actionnement (31) :
- sont transférés à différentes distances les uns des autres pour régler différentes largeurs d'ouverture de l'ouverture de sortie (13) pour l'essentiel en forme de fente du raccord de sortie (10) ; et/ou
- sont déplacés dans un mouvement oscillant, notamment avec une amplitude préréglable pour veiller à un rendement amélioré des solides coulants dosés pendant un processus de dosage en cas d'ouverture de sortie (13) décalée dans une position d'ouverture du raccord de sortie (10).
